# EUROPEAN PATENT SPECIFICATION

(11) **EP 1 802 034 B1**
(45) Date of publication and mention of the grant of the patent: **08.10.2008**
(21) Application number: 05814196.1
(22) Date of filing: 29.11.2005
(51) Int. Cl.: H04L 12/24, H04L 12/28, H04J 3/14

(54) **A METHOD FOR NEGOTIATING THE BANDWIDTH OF DATA COMMUNICATION CHANNEL AUTOMATICALLY**
VERFAHREN ZUM AUTOMATISCHEN AUSHANDELN DER BANDBREITE EINES DATENKOMMUNIKATIONSKANALS
PROCEDE DE NEGOCIATION AUTOMATIQUE DE LARGEUR DE BANDE DE CANAL DE COMMUNICATION DE DONNEES

(30) Priority: 30.11.2004 CN 200410096463
(43) Date of publication of application: 27.06.2007
(73) Proprietor: Huawei Technologies Co., Ltd., Shenzhen, Guangdong Province 518129 (CN)
(72) Inventor: LI, Dan, Shenzhen, Guangdong 518129 (CN); LI, Quan, Shenzhen, Guangdong 518129 (CN); DENG, Zhonghua, Shenzhen, Guangdong 518129 (CN)
(74) Representative: Epping - Hermann - Fischer
(86) International application number: PCT/CN2005/002042
(87) International publication number: WO 2006/058490

(56) References cited:
- EP-A- 1 083 689
- WO-A1-00/07313
- US-A1- 2002 172 188
- US-B1- 6 594 279
- HELENA KOAY YANGGUANG XU LUCENT: "Automatic Neighbor Discovery for Optical Network; draft-koay-mpls-and-optical-00.txt;" IETF STANDARD-WORKING-DRAFT, INTERNET ENGINEERING TASK FORCE, IETF, CH, November 2000 (2000-11), pages 1-9, XP015031061 ISSN: 0000-0004

## Description

### Field of the Invention

The present invention relates to communication technology, more particularly to data transfer, and specifically to a method for negotiating bandwidth of a Data Communication Channel (DCC) automatically.

### Background of the Invention

A characteristic of synchronous optical networks, e.g. SDH/SONET is high automatization of operation, administration, maintenance and provisioning (OAM&P). Functions such as real time service dispatchment, alarm and fault location, online performance testing can be achieved by issuing commands to network elements and checking data in the network elements via network management terminal. The corresponding data which is used to support the OAM&P function is located in D1-D2 bytes of an SDH/SONET frame, and transmitted in the network through SDH/SONET signals. In this way, the D1-D2 bytes construct a common Data Communication Channel (DCC) which can be accessed by all network elements. As physical layer of an Embedded Control Channel (ECC), the D1-D2 bytes are used to transmit OAM&P information between the network elements, and construct a DCC of the Telecommunication Management Network (TMN).

The DCC bandwidth of each network element, i.e., the number of D bytes used to transmit the OAM&P information between the network elements, is generally designated by users when the network elements are configured. Because the DCC bandwidth available to each network element may be different from each other, it is necessary to configure the DCC of each network element correctly, so as to ensure the correct transmission of the OAM&P information between network elements.

At present, data transmission between network elements is performed by using a default DCC, which is constructed by D1-D3 bytes. Some of the network elements may be configured with DCC bandwidth, and D bytes used by each network element can be configured manually in accordance with the DCC bandwidth supported by the network element.

With the default DCC bandwidth, a disadvantage is that only D1-D3 bytes are used to transmit data between network elements. When there are other unused D bytes, DCC bandwidth resource can not be utilized effectively, which affects the communication efficiency between the network elements. Further, each network element is configured with DCC bandwidth manually and a communication network usually includes decades or hundreds of network elements, therefore disadvantages include large manpower cost, and easily-occurred errors during the manual configuration, which result in large maintenance cost. Besides, if the DCC bandwidth of a certain network element changes, it is possible to reconfigure DCC bandwidth of the other network elements.

The working document "Automatic Neighbor Discovery for Optical Network; draft-koay-mpls-and-optical-00.txt;" by Helena Koay et al., IETF STANDARD-WORKING-DRAFT, INTERNET ENGINEERING TASK FORCE, IETF, CH, November 2000, presents a procedure for performing Automatic Neighbor Discovery (AND) in Optical only networks. Protocol and message sequence diagrams are provided.

EP 1 083 689 A2 refers to a method and apparatus of sending routing data across a network having line terminating equipment connected by a line data communications channel.

In US 6,594,279 B1, a method and an apparatus are presented for transporting IP datagrams over Synchronous optical networks at a guaranteed quality of service.

### Summary of the Invention

The present invention aims to provide a method for negotiating bandwidth of a data communication channel automatically, to achieve automatic negotiation of DCC bandwidth between network elements, to ensure the consistence of DCC bandwidth between network elements connected with each other directly, and to utilize the DCC bandwidth most efficiently, and to improve the communication efficiency between the network elements.

The technical solution of the present invention is presented in claim 1.

According to an embodiment, a method for negotiating bandwidth of a data communication channel automatically, includes the steps of:
performing a first communication channel configuration by two network elements respectively; the communication channel can be: a DCC, an Ethernet channel or other communication channels; the two network elements perform the first communication channel configuration in default configuration mode, i.e., configure default communication channels;
informing, by the network element at transmitting end of the DCC, the network element at receiving end of the DCC of DCC negotiation message via the preconfigured communication channel;
after receiving the DCC negotiation message, the network element at the receiving end comparing the overhead bytes contained in the DCC negotiation message with overhead bytes available to the network element at the receiving end, to obtain an intersection, which is overhead bytes, for constructing a DCC, available to both the network elements, wherein the overhead bytes as bandwidth of the channel are used to perform a second DCC configuration in the same order, so as to establish the DCC;
sending a DCC connection command from the two network elements to the opposite network element via the newly-configured DCC respectively;
after receiving the DCC connection command, sending a DCC connection acknowledgement command from the two network elements to the opposite network element respectively; accomplishing establishment of the DCC after the two network elements receive the DCC connection acknowledgement commands.

The network elements return to the default DCC configuration state if the configured timer is expired at any step during the second DCC establishment process.

Each DCC of the network elements determines whether to perform the DCC bandwidth negotiation in accordance with the requirements of users.

Both of the network elements at the transmitting and receiving ends of the DCC return to the default DCC configuration state if the preconfigured connected DCCs fails. Both of the two network elements perform the first DCC configuration by using one or more unused overhead bytes in a section overhead.

The one or more unused overhead bytes in the section overhead includes: D bytes and other unused section overhead bytes.

The DCC negotiation message includes: overhead bytes and the order of the overhead bytes available to the transmitting end of DCC of the current network element.

The D bytes are in an order from D1 to D12.

During the second DCC configuration, the default DCC constructed by the default section overhead bytes is reserved, and the new DCC is constructed by using the newly-added section overhead bytes.

The SDH/SONET section overhead bytes for constructing the DCC are are overhead bytes selected from a group consisting of D1-D12 bytes and other unused section overhead bytes, wherein the section overhead bytes used in the network elements at both ends of the DCC are consistent with each other.

The order of the overhead bytes constructing the DCC is variable, but it is consistent between the two ends of the DCC channel.

The advantageous effect of the present invention is that the method for negotiating bandwidth of a data communication channel automatically makes the DCC bandwidth remain always consistent to ensure correct transmission of OAM&P information between network elements. The method enables automatic establishment of a DCC with broadest bandwidth between two network elements connected with each other, which utilizes overhead resource of SDH/SONET signals effectively. The method also reduces congestion of TMN management information due to narrow DCC bandwidth resulted from lack of effective utilization of D byte overhead resource, and decreases the cost of management and maintenance of TMN effectively.

### Brief Description of the Drawings

FIG.1 is a sequential diagram of DCC bandwidth negotiation on optical fiber F1 according to an embodiment of the present invention;
FIG.2 is a state diagram of DCC bandwidth negotiation according to the present invention;
FIG. 3 is a schematic diagram illustrating the connection between network elements A and B via F1 and F2 according to an embodiment of the present invention;
FIG.4 illustrates a data structure for the DCC bandwidth negotiation between network elements A and B according to an embodiment of the present invention.

### Detailed Description of the Embodiments

Hereinafter embodiments of the present invention will be described with reference to the attached drawings. Necessary conditions for communication between two network elements connected by optical fibers via DCC include:
1) consistency of section overhead bytes of SDH/SONET signal which construct the DCC and the order of the section overhead bytes;
2) consistency of communication protocols running on the DCC.

The DCC is generally constructed by D1-D3 bytes of a regenerator section and D4-D12 bytes of a multiplex section. The overhead bytes are generally in an order from D1 to D12. In order to utilize the DCC bandwidth resource effectively, and to construct the DCC flexibly, it is necessary for two network elements connected via optical fibers to negotiate with each other to determine the construction and order of section overhead bytes of the DCC which connects the two network elements.

For the method for negotiating bandwidth of a data communication channel automatically according to the present invention, when two network elements are connected via optical fibers, the negotiation between the network elements is described as follows:
both of the network elements perform a default communication channel configuration respectively, i.e., utilize one or more unused overhead bytes in a section overhead (not limited to D bytes, and other unused section overhead bytes may be possible, wherein the default is D1-D3 bytes), and construct the default DCC in the same order;
because the DCC is a unidirectional channel, it is necessary for a transmitting end of the DCC to inform a network element at receiving end of the DCC of DCC negotiation message, i.e., overhead bytes and the order thereof available to transmitting end of the DCC of the current network element, via the default communication channel. In order to simplify the negotiation process, and to utilize the DCC resource most effectively, the D bytes can be in an order from D1 to D12. For example, if the available D bytes are D1, D3, D4 and D7, the order is D1D3D4D7;
after receiving the DCC negotiation message, each network element compares it with overhead bytes available to itself, to obtain an intersection, which are the overhead bytes available to construct a DCC between two network elements. These overhead bytes are used to perform the new DCC configuration;
each network element sends a DCC connection command to the opposite network element via the new DCC;
after receiving the DCC connection command, each network element sends a DCC connection acknowledgement command to the opposite network element;
the DCC is established after the network element receives DCC connection acknowledgement command.

If the configured timer is expired at any step during the above process, the network elements will return to the default DCC configuration state.

In accordance with the requirements of users, each DCC of the network elements can determine whether to perform DCC bandwidth negotiation. If any of the connected DCCs fails for some reasons, both of the transmitting end and the receiving end of the DCC will return to the default DCC state respectively.

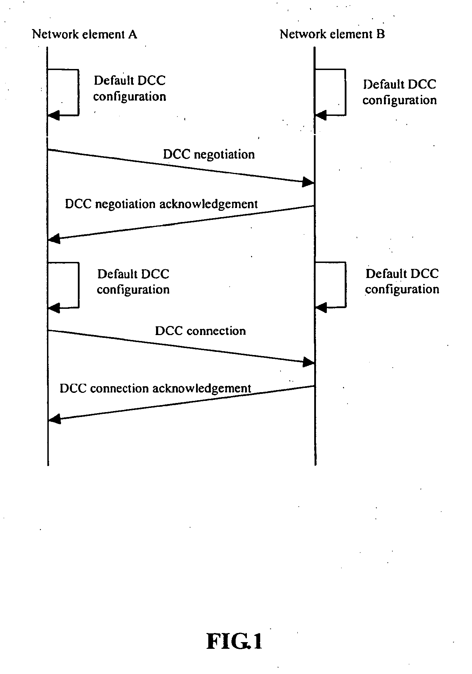

FIG.1 is a sequential diagram of DCC bandwidth negotiation on optical fiber F1 from network element A to B. Negotiation message under the DCC bandwidth auto-adjustment protocol can be also transferred via any other communication channel between the network elements. Besides the D bytes, other unused section overhead bytes can be used to construct the DCC.

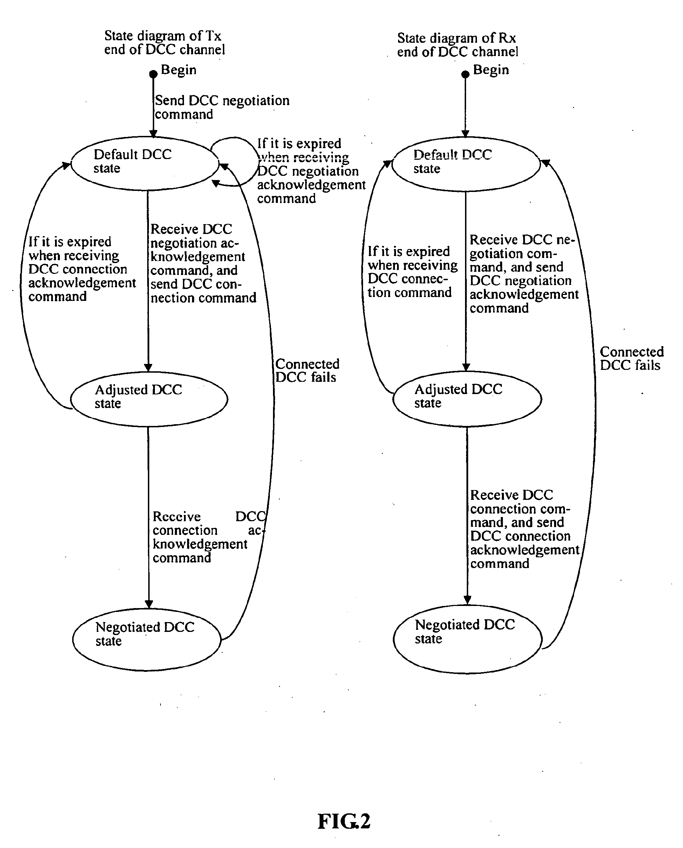

FIG.2 is a state diagram of the automatic DCC bandwidth negotiation between the transmitting end and the receiving end of the DCC:
wherein, a DCC negotiation command includes section overhead bytes information available to the transmitting end of the DCC, and a DCC negotiation acknowledgement command includes section overhead bytes information available to the receiving end of the DCC.

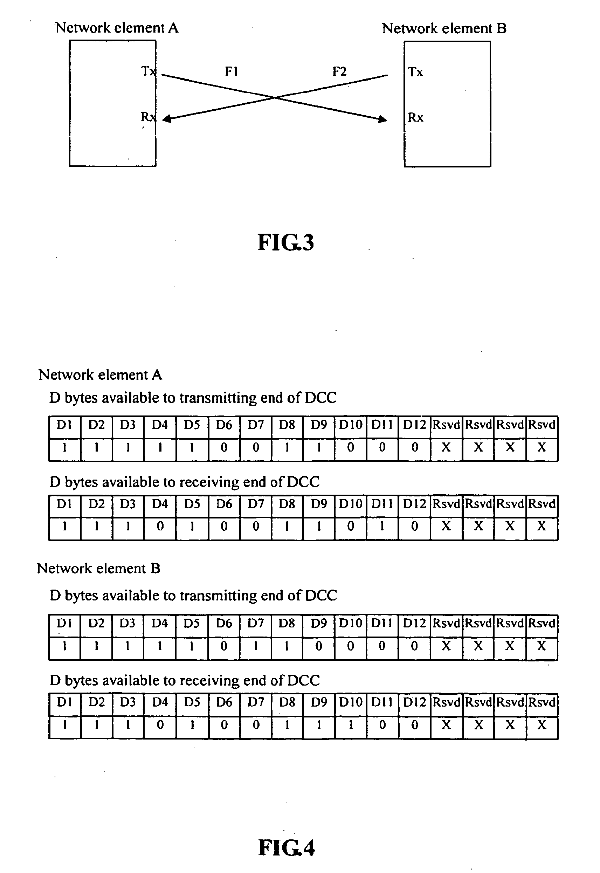

The following example illuminates the negotiation process cf the DCC bandwidth:
Assumed conditions:
   as shown in FIG.3, two network elements A and B are connected via optical fibers F1 and F2, wherein optical signals are sent from the network element A to B via the optical fiber F1, and from the network element B to A via the optical fiber F2;
   in the section overhead bytes of the optical signals, overhead bytes available to construct the DCC are bytes from D1 to D12. The D bytes available to transmitting end of the DCC of the network element A are D1-D3, D4, D5, D8 and D9; while the D bytes available to receiving end of the DCC of the network element A are D1-D3, D5, D8, D9 and D11; the D bytes available to transmitting end of the DCC of the network element B are D1-D3, D4, D5, D7 and D8; while the D bytes available to receiving end of the DCC of the network element B are D1-D3, D5, D8, D9 and D10;
   the default DCC between two network elements is constructed by D1-D3 bytes. Before the DCC bandwidth negotiation, the two network elements can transfer data via the default DCC. After the DCC bandwidth negotiation begins:
      as shown in FIG.4, the network element A sends DCC bandwidth negotiation message to the network element B via the default DCC of optical fiber F1, and the network element B sends DCC bandwidth negotiation message to the network element A via the default DCC of optical fiber F2. The bandswidth negotiation message, as shown in FIG. 4, can be represented in a 16-bit length data structure (the structure depends on practical requirements), wherein the reserved bytes can be used to indicate unused bytes as required. The network elements A and B initiate a timer for receiving the DCC negotiation acknowledgement commands respectively;
      the two network elements perform AND operation on the received D bytes available to the transmitting end of the opposite DCC and the D bytes available to the receiving end of its own DCC respectively, to obtain an intersection, which is the DCC bandwidth. The D bytes available to the transmitting end of the DCC of the network element A are: 111110011000XXXX, and the D bytes available to the receiving end of the DCC of the network element B are: 111010011100XXXX, AND operation is performed on these D bytes, thus the available D bytes of the DCC on the optical fiber F1 are D1D2D3D5D8D9; similarly, the D bytes available to the DCC on the optical fiber F2 are D1D2D3D5D8;
      The network elements take the D bytes information available to two ends of the DCC as the DCC bandwidth negotiation acknowledgement message, and send the same to the opposite network element, thus the opposite network elements can configure the DCC according to the DCC bandwidth negotiation acknowledgement message; and the two network elements initiate the timer for receiving DCC connection commands respectively;
      The network elements A and B send the connection commands to each other respectively via the newly-configured DCC; and the network elements A and B separately start the timer for receiving acknowledgement commands of the DCC connection;
      The network elements A and B send a connection acknowledgement command to each other after receiving the connection commands respectively.

After the network elements receive the connection acknowledgment commands, it indicates that the DCC configuration is accomplished, and the users can communicate with the newly-configured DCC.

If any one of the timers is expired, the DCC between the network elements A and B will be the default DCC, i.e., a DCC constructed by D1-D3 bytes.

According to the present invention, the DCC bandwidth negotiation is performed via a default communication channel between network elements.

After finding out the common section overhead bytes between the transmitting and the receiving ends of the DCC, the DCC is configured.

When the DCC is re-configured after the DCC bandwidth negotiation, the default DCC constructed by default section overhead bytes (e.g., D1-D3 bytes) can be reserved, and a new DCC can be constructed by newly-added section overhead bytes. That is, on an optical fiber, besides the default DCC, a new DCC can be negotiated out via the default DCC.

The SDH/SONET section overhead bytes which construct the DCC can be D1-D12 bytes, or other unused section overhead bytes. But the section overhead bytes used in the network elements at two ends of the DCC are consistent.

The order of overhead bytes that construct the DCC is variable, but it is consistent in the network elements at two ends of the DCC.

The advantageous effect of the present invention is that the method for negotiating bandwidth of a data communication channel automatically makes the DCC bandwidth remain always consistent to ensure correct transmission of OAM&P information between network elements. The method enables automatic establishment of a DCC with broadest bandwidth between two network elements connected with each other, which utilizes overhead resource of SDH/SONET signals effectively. The method also reduces congestion of TMN management information due to narrow DCC bandwidth resulted from lack of effective utilization of D byte overhead resource, and decreases the cost of management and maintenance of TMN effectively.

The above detailed embodiments are used to illustrate the present invention merely, but do not intend to limit the present invention.

## Claims

1. A method for negotiating bandwidth of a Data Communication Channel, herein after after referred to as DCC, automatically, comprising the steps of:
performing a first communication channel configuration by two network elements respectively;
informing, by the network element at the transmitting end of the DCC, the network element at the receiving end of the DCC of a DCC negotiation message via the DCC, the DCC negotiation message including overhead bytes available to the transmitting end;
after receiving the DCC negotiation message, the network element at the receiving end comparing the DCC negotiation message with overhead bytes available to the network element at the receiving end, to obtain an intersection, which represents overhead bytes, for constructing a DCC available to both the network elements, wherein the overhead bytes representing bandwidth of the DCC are used to perform a second DCC configuration in the same order, so as to establish the DCC.

2. The method according to claim 1, comprising:
sending a DCC connection command from the two network elements to the opposite network element via the newly-configured DCC respectively;
after receiving the DCC connection command, sending a DCC connection acknowledgement command from the two network elements to the opposite network element respectively;
accomplishing establishment of the DCC after the two network elements receive the DCC connection acknowledgement commands.

3. The method according to claim 1 or 2, wherein the first communication channel configuration is performed in default configuration mode.

4. The method according to one of claims 1 to 3, wherein each DCC of the network elements determines whether to perform the DCC bandwidth negotiation in accordance with the requirements of users.

5. The method according to one of claims 1 to 4, wherein the network elements return to the default DCC configuration state if the configured timer is expired at any step during the second DCC establishment process.

6. The method according to one of claims 1 to 5, wherein both of the network elements at the transmitting and receiving ends of the DCC return to the default DCC configuration state if the preconfigured connected DCCs fails.

7. The method according to one of claims 1 to 6, wherein both of the two network elements perform the first DCC configuration by using one or more unused overhead bytes in a section overhead, the one or more unused overhead bytes in the section overhead comprising: D bytes and other unused section overhead bytes.

8. The method according to one of claims 1 to 7_{,} wherein the DCC negotiation message comprises: overhead bytes and the order of the overhead bytes available to the transmitting end of DCC of the current network element.

9. The method according to claim 7, wherein the D bytes are in an order from D1 to D12.

10. The method according to one of claims 1 to 9, wherein during the second DCC configuration, the default DCC constructed by the default section overhead bytes is reserved, and the new DCC is constructed by using the newly-added section overhead bytes.

11. The method according to one of claims 1 to 10, wherein the SDH/SONET section overhead bytes for constructing the DCC are overhead bytes selected from a group consisting of D1-D12 bytes and other unused section overhead bytes, wherein the section overhead bytes used in the network elements at both ends of the DCC are consistent with each other.

## Patentansprüche

1. Verfahren zum automatischen Aushandeln von Bandbreite eines Datenkommunikationskanals, im Folgenden als DCC bezeichnet, das folgende Schritte umfasst:
Ausführen einer ersten Kommunikationskanal-Konfiguration durch jeweils zwei Netzwerkelemente;
durch das Netzwerkelement auf der Sendeseite des DCC Informieren des Netzwerkelementes auf der Empfangsseite des DCC über eine DCC-Aushandel-Nachricht über den DCC, wobei die DCC-Aushandel-Nachricht Kopfinformations-Bytes enthält, die der Empfangsseite zur Verfügung stehen;
nach Empfang der DCC-Aushandel-Nachricht durch das Netzwerkelement auf der Empfangsseite Vergleich der DCC-Aushandel-Nachricht mit Kopfinformations-Bytes, die dem Netzwerkelement auf der Empfangsseite zur Verfügung stehen, um eine Schnittmenge zu erhalten, die Kopfinformations-Bytes repräsentiert, um einen DCC zu konstruieren, der beiden Netzwerkelementen zur Verfügung steht, wobei die Kopfinformations-Bytes, die Bandbreite des DCC repräsentieren, dazu benutzt werden, eine zweite DCC-Konfiguration in derselben Reihenfolge durchzuführen, um den DCC aufzubauen.

2. Verfahren gemäß Anspruch 1, umfassend:
Senden eines DCC-Verbindungsbefehls jeweils von den beiden Netzwerkelementen an das gegenüber liegende Netzwerkelement über den neu konfigurierten DCC;
nach Empfang des DCC-Verbindungsbefehls Senden eines DCC-Verbindungs-Quittungsbefehls jeweils von den beiden Netzwerkelementen an das gegenüber liegende Netzwerkelement;
nachdem die beiden Netzwerkelemente den DCC-Quittungsbefehl empfangen haben, Ausführung des Aufbaus des DCC.

3. Verfahren gemäß Anspruch 1 oder 2, wobei die Konfiguration des ersten Kommunikationskanals im voreingestellten Konfigurations-Modus durchgeführt wird.

4. Verfahren gemäß einem der Ansprüche 1 bis 3, wobei jeder DCC der Netzwerkelemente in Übereinstimmung mit den Anforderungen der Benutzer bestimmt, ob das Aushandeln der Bandbreite durchzuführen ist.

5. Verfahren gemäß einem der Ansprüche 1 bis 4, wobei die Netzwerkelemente in jedem Schritt während des zweiten DCC-Aufbau-Prozesses in den voreingestellten DCC-Konfigurations-Zustand zurückkehren, wenn der konfigurierte Zeitgeber abgelaufen ist.

6. Verfahren gemäß einem der Ansprüche 1 bis 5, wobei die Netzwerkelemente sowohl auf der Sende-, als auch auf der Empfangsseite des DCC in den voreingestellten DCC-Konfigurations-Zustand zurückkehren, wenn die vorkonfigurierten verbundenen DCCs ausfallen.

7. Verfahren gemäß einem der Ansprüche 1 bis 6, wobei die Netzwerkelemente die erste DCC-Konfiguration durchführen, indem sie ein oder mehrere nicht benutzte Kopfinformations-Bytes in einem Abschnittsrahmenkopf benutzen, wobei die ein oder mehreren nicht benutzten Kopfinformations-Bytes im Abschnittsrahmenkopf umfassen: D-Bytes und andere nicht benutzte Kopfinformations-Bytes.

8. Verfahren gemäß einem der Ansprüche 1 bis 7, wobei die DCC-Aushandel-Nachricht umfasst: Kopfinformations-Bytes und die Reihenfolge der Kopfinformations-Bytes, die der Sendeseite des DCC des aktuellen Netzwerkelementes zur Verfügung stehen.

9. Verfahren gemäß Anspruch 7, wobei die D-Bytes von D1 bis D12 angeordnet sind.

10. Verfahren gemäß einem der Ansprüche 1 bis 9, wobei während der zweiten DCC-Konfiguration der voreingestellte DCC, der durch die voreingestellten Bytes des Abschnittsrahmenkopfes konstruiert wird, reserviert wird, und der neue DCC unter Verwendung der neu hinzugefügten Abschnittsrahmenkopf-Bytes konstruiert wird.

11. Verfahren gemäß einem der Ansprüche 1 bis 10, wobei die Bytes des SDH/SONET-Abschnittsrahmenkopfes zur Konstruktion des DCC Kopfinformations-Bytes sind, die aus einer Gruppe ausgewählt wurden, die aus den Bytes D1-D12 und anderen unbenutzten Abschnittsrahmenkopf-Bytes besteht, wobei die Abschnittsrahmenkopf-Bytes, die in den Netzwerkelementen an beiden Seiten des DCC benutzt werden, zueinander konsistent sind.

## Revendications

1. Procédé de négociation automatique de la bande passante d'un canal de communication de données ou Data Communication Channel, dénommé ci-après DCC, comprenant les étapes comprenant à :
effectuer une première configuration de canal de communication par respectivement deux éléments de réseau ;
informer l'élément de réseau à l'extrémité de réception du DCC par l'élément de réseau à l'extrémité de transmission du DCC d'un message de négociation de DCC via le DCC, le message de négociation DCC comprenant des octets d'en-tête disponibles à l'extrémité de transmission ;
après réception du message de négociation DCC, comparaison par l'élément de réseau à l'extrémité de réception du message de négociation DCC avec des octets d'en-tête disponibles pour l'élément de réseau à l'extrémité de réception, de manière à obtenir une intersection qui représente des octets d'en-tête pour constituer ainsi un canal DCC, disponible pour les deux éléments de réseau, dans lequel les octets d'en-tête représentant la bande passante du canal DCC sont utilisés pour effectuer une seconde configuration DCC dans le même ordre, de manière à établir le canal DCC.

2. Procédé selon la revendication 1, comprenant les étapes comprenant à : envoyer une commande de connexion DCC depuis les deux éléments de réseau vers l'élément de réseau opposé respectif via le canal DCC nouvellement configuré ;
après réception de la commande de connexion DCC, envoyer une commande de confirmation de connexion DCC depuis les deux éléments de réseau vers l'élément de réseau opposé respectif ;
effectuer l'établissement d'un canal DCC après réception des commandes de confirmation de connexion DCC par les deux éléments de réseau.

3. Procédé selon la revendication 1 ou 2, dans lequel la première configuration de canal de communication est effectuée en mode de configuration par défaut.

4. Procédé selon l'une des revendications 1 à 3, dans lequel chaque canal DCC des éléments de réseau détermine si la négociation de bande passante DCC doit être effectuée selon les exigences d'utilisateurs.

5. Procédé selon l'une des revendications 1 à 4, dans lequel les éléments de réseau retournent à l'état de configuration DCC par défaut si le délai du temporisateur configuré a expiré à une étape quelconque durant le second procédé d'établissement de canal DCC.

6. Procédé selon l'une des revendications 1 à 5, dans lequel les deux éléments de réseau des extrémités de transmission et de réception du canal DCC retournent à l'état de configuration DCC par défaut si le canal DCC connecté préconfiguré ne s'active pas.

7. Procédé selon l'une des revendications 1 à 6, dans lequel les deux éléments de réseau effectuent la première configuration DCC en utilisant un ou plusieurs octets d'en-tête non utilisés d'une section d'en-tête, ledit ou lesdits octets d'en-tête comprenant : D octets et d'autres octets d'en-tête de section non utilisés.

8. Procédé selon l'une des revendications 1 à 7, dans lequel le message de négociation DCC comprend : des octets d'en-tête et l'ordre des octets d'en-tête disponibles à l'extrémité de transmission du canal DCC de l'élément de réseau actuellement utilisé.

9. Procédé selon la revendication 7, dans lequel les D octets sont agencés dans un ordre de D1 à D12.

10. Procédé selon l'une des revendications 1 à 9, dans lequel, au cours de la seconde configuration DCC, le canal DCC par défaut constitué par les octets d'en-tête de section par défaut est réservé et le nouveau canal DCC est constitué en utilisant les octets d'en-tête de section nouvellement ajoutés.

11. Procédé selon l'une des revendications 1 à 10, dans lequel les octets d'en-tête de section SDH/SONET servant à constituer le canal DCC sont des octets d'en-tête choisis dans le groupe comprenant de D1 à D12 octets et d'autres octets d'en-tête de section non utilisés, moyennant quoi les octets d'en-tête de section utilisés dans les éléments de,réseau aux deux extrémités du canal DCC sont cohérents entre eux.
